# FASCICULE DE BREVET EUROPEEN

(11) **EP 1 583 193 B1**
(45) Date de publication et mention de la délivrance du brevet: **25.08.2010**
(21) Numéro de dépôt: 05290647.6
(22) Date de dépôt: 24.03.2005
(51) Int. Cl.: H02G 3/00

(54) **Procédé d'optimisation d'un câblage électrique, notamment dans le domaine aéronautique**
Optimierungsverfahren einer elektrischen Verdrahtung, insbesondere in der Aeronautik
Optimization method of an electrical wiring, especially in the aeronautic field

(30) Priorité: 02.04.2004 FR 0403468
(43) Date de publication de la demande: 05.10.2005
(73) Titulaire: Airbus Operations, 31060 Toulouse (FR)
(72) Inventeur: Boubekeur, Jean-Luc, 31200 Toulouse (FR)
(74) Mandataire: Hartmann, Jean-Luc

(56) Documents cités:
- US-A1- 2003 047 997
- PATENT ABSTRACTS OF JAPAN vol. 2000, no. 01, 31 janvier 2000 (2000-01-31) -& JP 11 272727 A (HITACHI PLANT ENG & CONSTR CO LTD), 8 octobre 1999 (1999-10-08)

## Description

La présente invention concerne un procédé d'optimisation d'un câblage électrique, notamment dans le domaine aéronautique.

Dans les aéronefs, le nombre de systèmes embarqués augmente continuellement dans le temps. Cette augmentation vise à obtenir des avions plus sûrs et plus performants. Elle conduit cependant à faire croître le nombre de câbles présents dans un aéronef. Ceci implique une masse de câbles électriques embarquée à bord d'un avion en constante progression dans le temps.

Cette masse supplémentaire embarquée est pénalisante pour un aéronef donné. Lorsque la masse à vide augmente, il faut prévoir soit une motorisation plus puissante, soit une charge utile diminuée. Dans tous les cas de figure, la consommation en carburant de l'aéronef ramenée au passager transporté ou à la tonne de fret, augmente, impliquant de ce fait une hausse des coûts d'exploitation de l'aéronef.

Document US-A-2003/0047997 concerne un réseau de collecte de données et un système de distribution d'énergie électrique permettant de réduire le poids de fils dans un aéronef.

La présente invention a alors pour but de fournir des moyens permettant, pour un aéronef donné, de limiter la masse des câbles électriques nécessaire au câblage des divers systèmes de l'aéronef sans toutefois limiter leur nombre et/ou leur emplacement.

A cet effet, elle propose un procédé d'optimisation d'un câblage dans lequel les caractéristiques des câbles utilisés pour relier une source à une charge réceptrice sont définies en fonction de contraintes prédéterminées et environnementales.

Selon l'invention, dans les cas où une ligne réalisant la liaison entre la source et la charge réceptrice comporte plusieurs câbles distincts reliés par des prises de coupure, la section des câbles est dimensionnée pour chaque câble de la ligne indépendamment des autres câbles puis optimisée en tenant compte des contraintes globales de la ligne.

De manière originale, l'invention propose ici de non pas considérer une ligne reliant une source de puissance à un équipement récepteur comme une ligne de section constante mais comme une ligne de section variable. De cette manière, il est possible de limiter sur certaines portions de la ligne la section des câbles utilisés alors qu'il n'est pas possible d'avoir une section réduite sur la totalité de la ligne.

Pour pouvoir déterminer au mieux la section des câbles utilisés, l'invention propose dans un mode de réalisation préféré que préalablement à la détermination de la section des câbles utilisés, le routage des lignes et câbles permettant de calculer un chemin à emprunter par les diverses lignes et câbles est effectué. Ainsi la connaissance du chemin que prennent les câbles permet une meilleure optimisation de la ligne car il est alors possible de déterminer le type de câble utilisé (blindé ou non, résistant à telle ou telle température, etc. ). Dans le cas d'un routage préalable, ce routage des lignes et câbles permet de préférence de déterminer la position au moins approximative des prises de coupure séparant deux câbles voisins. De cette manière, la longueur de chaque câble est connue et la masse des câbles peut être mieux déterminée.

Dans une forme de réalisation d'un procédé d'optimisation selon l'invention, pour au moins un câble d'une ligne, plusieurs sections de câbles utilisables en fonction des contraintes imposées à ce câble sont déterminées ; ces câbles sont combinés selon diverses combinaisons pour former une ligne ; il est vérifié pour chaque ligne si les contraintes globales de la ligne sont satisfaites, et la ligne répondant aux contraintes techniques globales et de plus faible masse est sélectionnée.

Toutes les caractéristiques des diverses variétés de câbles pouvant être utilisées pour réaliser le câblage considéré sont avantageusement mémorisées dans une base de données. Le terme variété est utilisé ici pour se distinguer du "type" de câble décrit plus loin. Le type d'un câble donne sa structure générale (dans le domaine électrique, il y a par exemple les câbles blindés ou non, avec un ou plusieurs fils, avec un isolant de telle ou telle nature, etc. ). La variété concerne ici aussi la section du câble. Ainsi deux câbles de même variété présentent à la fois une même section et sont d'un même type.

L'optimisation de la masse globale des câbles est réalisée de préférence sur deux variables discrètes, le type et la section des câbles.

La présente invention est particulièrement adaptée pour être appliquée à la réalisation d'un câblage électrique. Dans ce cas, les contraintes prédéterminées comprennent par exemple une valeur d'intensité maximale définie par entre autres la consommation d'une charge et une chute de tension maximale admise. Dans ce domaine électrique, les contraintes environnementales comprennent par exemple la température environnante.

L'invention concerne également :
- un programme d'ordinateur stocké sur un support d'informations, ledit programme comportant des instructions permettant la mise en oeuvre d'un procédé d'optimisation tel que décrit ci-dessus, lorsque ce programme est chargé et exécuté par un système informatique, et
- un support d'informations lisible par un système informatique, éventuellement totalement ou partiellement amovible, notamment CD-ROM, DVD-ROM ou support magnétique, tel un disque dur ou une disquette, ou support transmissible, tel un signal électrique ou optique, caractérisé en ce qu'il comporte des instructions d'un programme d'ordinateur permettant la mise en oeuvre d'un procédé tel que décrit ci-dessus, lorsque ce programme est chargé et exécuté par un système informatique.

Des détails et avantages de la présente invention ressortiront mieux de la description qui suit, faite en référence au dessin schématique annexé sur lequel :
La figure 1 représente schématiquement un circuit de type commuté,
La figure 2 illustre la décomposition d'un réseau électrique en lignes,
La figure 3 montre une représentation simplifiée d'un réseau, tel par exemple celui de la figure 2, après routage,
La figure 4 illustre le choix du type et de la jauge de câbles dans l'état de l'art antérieur à la présente invention,
La figure 5 illustre le choix du type et de la jauge de câbles dans l'exemple représenté sur la figure 4 en utilisant un procédé selon l'invention,
Les figures 6 à 8 illustrent schématiquement trois étapes d'un procédé selon l'invention, et
La figure 9 est un organigramme correspondant à un algorithme pour la mise en oeuvre d'un procédé selon l'invention.

Le dessin illustre l'utilisation d'un procédé selon l'invention pour la réalisation d'un câblage électrique d'un aéronef. Un procédé semblable peut être utilisé dans des applications autres que l'aéronautique.

La description ci-après montre comment, selon l'invention, il est possible de diminuer la masse globale des câbles d'un réseau électrique. Dans les aéronefs, l'augmentation du nombre de systèmes embarqués ainsi que l'augmentation des puissances consommées par les équipements de l'aéronef conduit à une augmentation de la masse des installations électriques de l'aéronef. Pour limiter cette augmentation, l'invention propose d'optimiser la masse des câbles reliant les divers systèmes embarqués et alimentant les équipements.

Bien entendu, le réseau électrique optimisé obtenu doit satisfaire à toutes les normes de sécurité sans agir sur les puissances consommées, ni sur le nombre des systèmes embarqués, ni même sur leur emplacement.

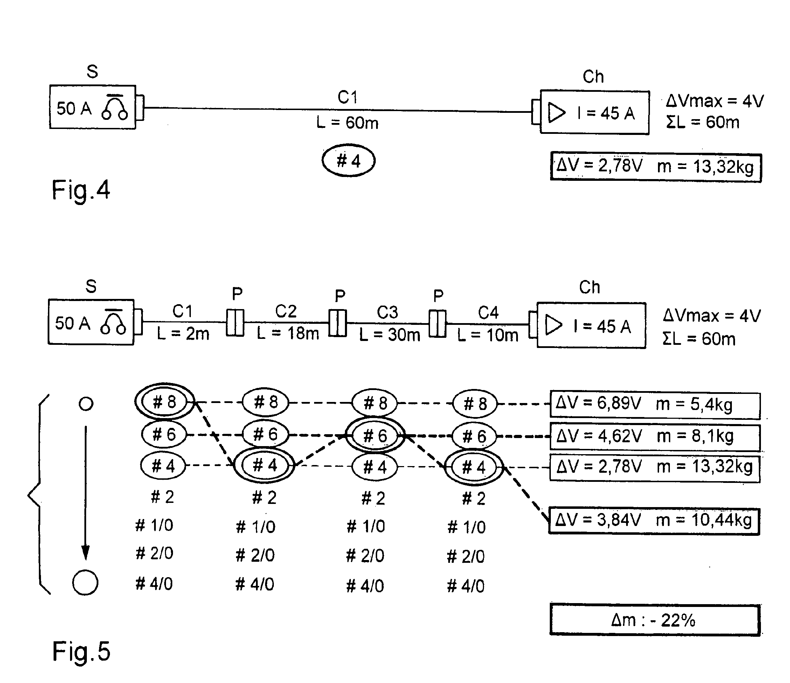

Dans l'état de l'art antérieur à la présente invention (figure 4) lorsqu'une source S alimente une charge Ch l'architecture globale de la fonction est définie. L'analyse de la spécification de la charge (équipement) fournit une consommation maximale exprimée en Ampères. Compte tenu de la position de la source S et de la charge Ch, ainsi que des différents obstacles se trouvant éventuellement entre cette source S et cette charge Ch, une longueur de la liaison est déterminée. Dans l'exemple de la figure 4, cette longueur est L = 60m. Compte tenu de la consommation maximale de la charge Ch, un disjoncteur (ou similaire) représenté ici associé à la source S, limite l'intensité maximale dans le câble C1 reliant la source S à la charge Ch. Dans le cas présent, la consommation maximale de la charge C est de 45A et le disjoncteur est prévu pour couper à 50A. Dans le cas présent, une contrainte technique est prédéterminée. La chute de tension (perte de charge) dans le câble C1 doit être inférieure à 4V (soit ΔVmax = 4V).

Il convient maintenant de déterminer le type et la jauge du câble C1. Le type d'un câble électrique est codifié. L'indication du type d'un câble permet de connaître notamment le nombre de conducteurs constituant le câble, le matériau utilisé pour la réalisation des conducteurs, la nature de l'isolant ainsi que la présence éventuellement ainsi que la nature, d'un blindage. La jauge d'un câble, symbolisée par le signe # est exprimée suivant la norme AWG (American Wire Gauge). La valeur de la jauge diminue lorsque la section du conducteur, et donc sa résistance ohmique, augmente.

Dans le cas présent illustré sur la figure 4, compte tenu du calibre disjoncteur de 50A, la jauge de câbles maximale (c'est-à-dire la section minimale) pour le câble C1 est #8 en technologie aluminium et #10 en technologie cuivre. Compte tenu des différentes contraintes (ΔV par exemple) et en ayant souci de ne pas augmenter inutilement la masse des câbles, on choisit alors un câble de jauge #4.

Par la suite, une fois tous les éléments étant définis (source, câble, équipement) des harnais électriques sont définis. Des électriciens définissent alors le chemin théorique de la liaison fonctionnelle reliant les divers équipements de l'aéronef. En fonction du chemin retenu, le type de câbles au niveau de chaque harnais est déterminé. En fonction des contraintes environnementales (température par exemple), des spécifications du schéma fonctionnel, des connecteurs prévus, etc..., le type de câbles est déterminé. Enfin, un contrôle final manuel permet de garantir que les définitions choisies correspondent bien aux spécifications requises.

La présente invention propose une manière nouvelle et originale de définir un réseau électrique, comme décrit ci-après.

Tout d'abord, comme précédemment, l'architecture du système est créée. Des données relatives aux signaux (tension, courant, ...) ainsi que des exigences spécifiques auxquelles doit répondre le circuit (chutes maximales de tension, contraintes thermiques particulières, ...) sont définies.

Dans un second temps, la position des équipements étant définie, on constitue les harnais électriques en déterminant notamment leur longueur. On peut alors réaliser le routage des liaisons fonctionnelles. On ne peut parler ici encore d'un routage physique étant donné que les jauges et les types de câbles ne sont pas encore déterminés. On connaît toutefois les chemins que peuvent prendre les divers câbles. Il s'agit alors de calculer la longueur de chacun d'eux à partir des données disponibles. Ces données sont de préférence rassemblées dans une base de données numérique qui constitue une "maquette" tridimensionnelle numérique de l'avion.

Dans l'étape suivante les jauges et types des câbles sont calculés. L'ensemble des contraintes électriques, technologiques (matériau des câbles, connectique, ...) et thermiques est pris en compte pour s'assurer du bon et juste dimensionnement des câbles. On remarque qu'ici les jauges de câbles sont calculées après le routage de ceux-ci. La détermination des jauges des divers câbles est alors optimisée pour diminuer la masse globale du réseau de câbles. La présente invention concerne notamment cette dernière étape de détermination de la jauge des câbles et l'optimisation de celle-ci.

Avant de détailler un exemple de détermination de la jauge de câbles selon l'invention, quelques définitions de mots utilisés par la suite sont données.

Un réseau électrique est un ensemble de plusieurs sources reliées à plusieurs charges, ces sources et ces charges étant reliées par des câbles en mettant en oeuvre éventuellement des composants (disjoncteur, diode, ...).

Une ligne est un sous-ensemble connexe d'un réseau faisant intervenir une seule source et une seule charge et comportant un ou plusieurs câbles ainsi qu'éventuellement un ou plusieurs composants. Une ligne est une combinaison unique de câbles et d'équipotentielles reliant la source à la charge.

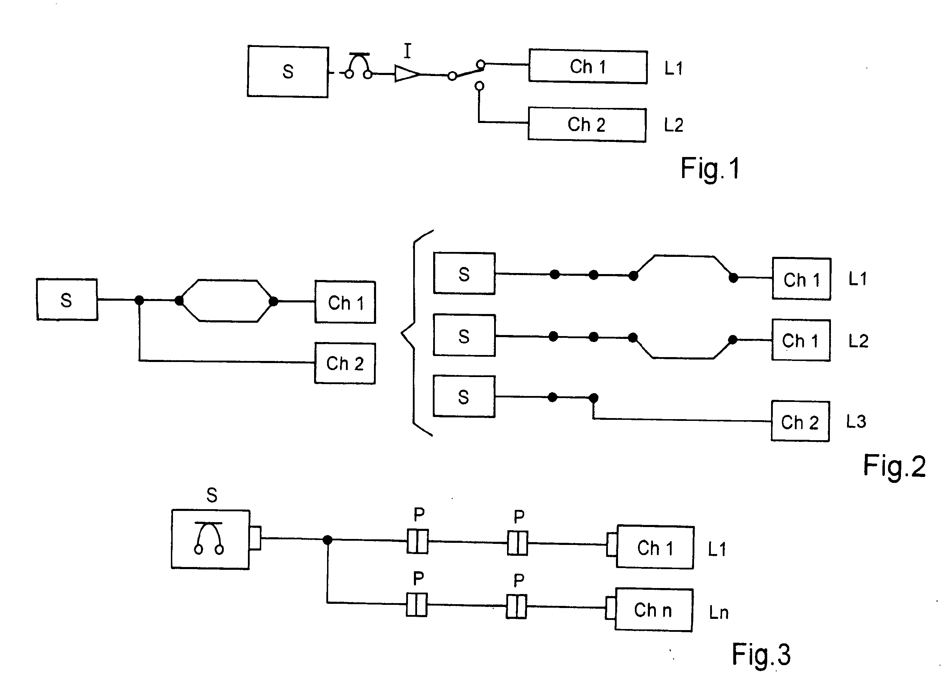

La figure 2 illustre la décomposition d'un réseau simple en plusieurs lignes. Chaque ligne comporte une source et une charge. On peut ainsi tout d'abord considérer la source S et la charge Ch1. On remarque que deux chemins électriques distincts relient la source S à la charge Ch1. Il faut donc considérer deux lignes électriques qui sont appelées, sur la droite de la figure 2, L1 et L2. En considérant ensuite la source S et la charge Ch2, on remarque qu'un seul chemin électrique relie ces deux éléments. Ce chemin forme ainsi la ligne baptisée L3.

Dans le cas d'un réseau commuté, comme illustré sur la figure 1, on prend en compte les diverses positions des commutateurs. Dans l'exemple représenté ici, où une source S est commutée entre deux charges Ch1 et Ch2, on décompose le réseau représenté en deux lignes L1 et L2.

Pour déterminer les jauges de câbles, différentes contraintes doivent être prises en compte.

Il y a tout d'abord les contraintes électriques. La jauge de câble doit être compatible avec le calibre du disjoncteur afin de protéger la ligne avant que celle-ci ne soit parcourue par un courant l'amenant par échauffement à une température critique. Il convient également, afin de permettre un bon fonctionnement des équipements, de limiter les chutes de tension en ligne (ΔVmax). Ces chutes de tension sont déterminées préalablement en fonction des équipements alimentés par la source.

Il y a ensuite les contraintes thermiques. Pour empêcher tout risque d'échauffement excessif des câbles ou de vieillissement prématuré de l'installation électrique, il faut tenir compte notamment des dissipations par effet Joule, de la température ambiante ainsi que des conditions de refroidissement (air libre/confiné, etc ...).

Enfin, il y a les contraintes technologiques. Les isolants utilisés pour les câbles ne résistent pas tous aux mêmes températures. Le choix de l'isolant sera essentiellement conditionné par les contraintes thermiques. Le matériau conducteur (aluminium ou cuivre) dans un avion dépend de la zone de l'avion à laquelle le câble est destiné. En effet, pour éviter une contamination éventuelle, l'utilisation de câbles aluminium est limitée à certaines zones de l'avion. Des contraintes spécifiques (par exemple utilisation d'un câble trifilaire blindé) influent également le type de câbles à mettre en oeuvre. Il faut également tenir compte du rayon de courbure admissible par le câble lors de son utilisation. Ceci interdit l'utilisation de certains types de câbles dans des espaces confinés. Le type de câble choisi doit également tenir compte du connecteur auquel il doit être raccordé.

La figure 5 illustre le choix de jauges de câbles sur une ligne en reprenant la source S et la charge Ch de la figure 4. Sur la figure 5, on remarque qu'il n'y a non plus un seul câble entre la source S et la charge Ch1 mais quatre câbles nommés C1, C2, C3 et C4. Ces câbles mesurent respectivement 2m, 18m, 30m et 10m. On retrouve donc une longueur totale (EL) de 60m. Une prise de coupure P sépare (comme sur la figure 3) à chaque fois deux câbles voisins.

Les contraintes restent les mêmes que précédemment (figure 4). Le disjoncteur déclenche à 50A. De ce fait, pour chacun des câbles C1 à C4, il est possible de sélectionner des jauges de #8 à #4/0 en technologie cuivre et de #6 à #3/0 en technologie aluminium. Sur la figure 5 on a considéré que les câbles C1 à C4 étaient en cuivre.

Sur la figure 5 on a représenté face à chaque câble C1 à C4 les diverses jauges a priori admissibles. Ces jauges sont classées par leur masse croissante indiquée par la flèche sur la gauche de la figure.

Sur la droite de la figure sont indiquées des chutes de tension (ΔV) pour quatre exemples de combinaison de câbles. La première combinaison correspond à quatre câbles de jauge #8. Cette combinaison donne une chute de tension maximale ΔV de 6,89V. Cette solution n'est donc pas admissible, la chute de tension étant limitée à 4V. De même, si tous les câbles C1-C4 sont de jauge #6, la chute de tension ΔV est de 4,62V, ce qui n'est pas acceptable. Avec quatre câbles de jauge #4, on arrive à la solution de l'art antérieur illustré sur la figure 4. La chute de tension ΔV est de 2,78V. La masse de l'ensemble des quatre câbles C1 à C4 est quant à elle alors de 13,32kg. D'autres combinaisons peuvent toutefois être envisagées en prenant des câbles avec des jauges différentes. La combinaison préférée retenue ici est un câble C1 de jauge #8, un câble C2 de jauge #4, un câble C3 de jauge #6 et un câble C4 de jauge #4. Cette combinaison donne une chute de tension maximale ΔV de 3,84V pour une masse de 10,44kg. On remarque ainsi que la différence de masse de câbles entre cette combinaison préférentielle et le calcul des jauges de câbles de l'art antérieur est de 22 %.

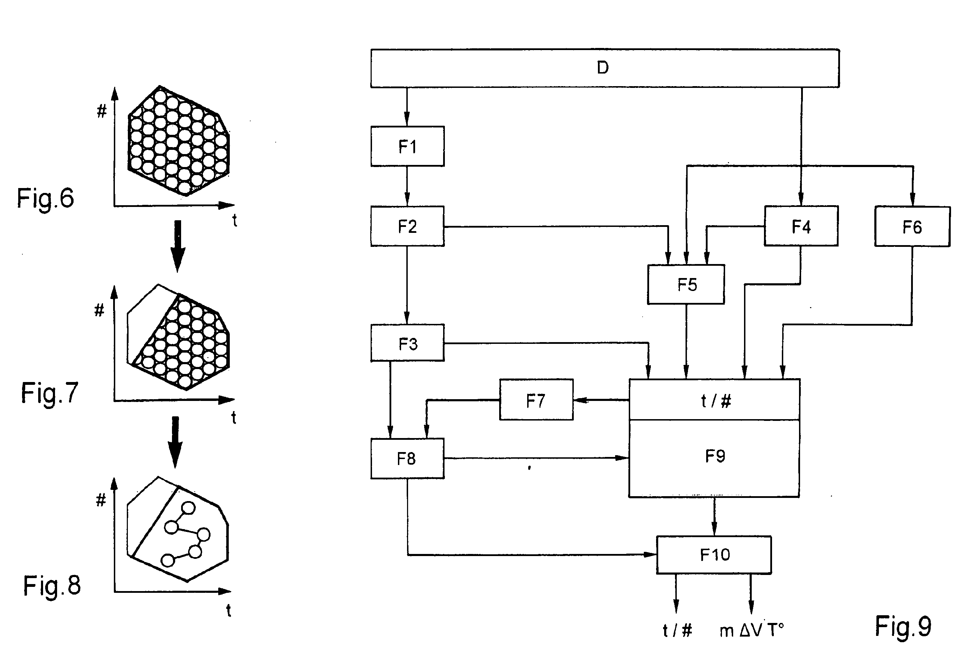

Les figures 6 à 8 illustrent cette détermination optimisée des jauges de câbles. Sur ces figures, le type t des câbles est représenté en abscisse et la jauge # en ordonnée. Sur la figure 6, on représente tous les types et jauges de câbles qui peuvent convenir lorsque l'on tient compte uniquement des contraintes concernant le courant devant circuler dans le câble, l'environnement dans lequel le câble se trouve (cuivre ou aluminium), les contraintes thermiques, et aussi les contraintes en matière de connexion. On obtient alors un grand nombre de possibilités. Dans l'exemple de la figure 5, elles correspondent à toutes les jauges de câbles indiquées. Une fois ces câbles valides sélectionnés il convient de vérifier qu'en termes de chute de tension les spécifications sont respectées. Le choix des câbles est alors restreint comme l'illustre la figure 7. Enfin, lorsqu'on optimise la masse des câbles, seuls quelques câbles peuvent être retenus, comme illustré sur la figure 8.

Dans l'exemple de la figure 5, le problème d'optimisation de masse est un problème d'optimisation discrète (jauges/types de câbles) sous contrainte (chute de tension en ligne). La difficulté d'un tel problème s'accroît considérablement lorsque l'optimisation porte non plus sur une ligne mais sur un réseau. Un tel réseau peut être schématisé par exemple comme sur la figure 3. Une source S associée à un disjoncteur est reliée à plusieurs charges Ch1 à Chn formant ainsi un ensemble de lignes L1 à Ln.

Compte tenu du nombre important de câbles présents dans un aéronef moderne, un calcul d'optimisation simultané sur tous les câbles semble difficilement réalisable car il demanderait des moyens de calcul trop importants. Toutefois, on peut distinguer dans un aéronef plusieurs réseaux plus ou moins indépendants les uns des autres. Une optimisation de la masse peut être réalisée réseau par réseau.

La figure 9 montre sous forme schématique un algorithme de calcul pour obtenir une optimisation des jauges et types de câbles dans un réseau.

Les différentes informations nécessaires pour définir le réseau électrique de l'aéronef sont regroupées dans une base de données D. Cette base de données D symbolise les diverses informations disponibles concernant l'architecture de l'aéronef. Elles ne sont pas forcément regroupées dans une même base de données physique. On peut même supposer que certaines de ces informations nécessaires au calcul exposé ci-après ne sont pas disponibles sous forme numérique mais doivent être saisies.

La fonction F1 permet de constituer les lignes. A partir d'un réseau commuté tel celui de la figure 1, cette fonction F1 sélectionne automatiquement les différents états des composants de commutation et recherche ainsi l'ensemble des composants permettant de constituer une ligne électrique.

La fonction F2 calcule, pour chaque composante de la ligne, les courants maximaux Imax, afin notamment de dimensionner les câbles en température et de calculer le calibre du disjoncteur.

La fonction F3 calcule/vérifie le calibre du disjoncteur. Si la technologie du disjoncteur n'a pas été spécifiée, au niveau de cette fonction F3 le disjoncteur présentant la résistance ohmique minimale est sélectionné. On peut déjà calculer à ce niveau là les jauges de câbles compatibles avec le calibre du disjoncteur.

A partir des données D, la fonction F4 calcule l'environnement le plus contraignant auquel est soumis un câble prédéterminé. Les règles métier, définies par une norme, imposent un choix de types et de jauges de câbles en fonction de l'environnement avion dans lequel ce câble chemine. Un même câble peut traverser des zones avion de caractéristiques différentes (zone pressurisée ou non, température ambiante différente, etc ...). On obtient ici aussi un ensemble de types/jauges de câbles compatibles.

La fonction F5 permet de calculer les contraintes thermiques. Ce calcul est déjà réalisé dans l'état de l'art. Selon les données fournies en entrée, des méthodes différentes peuvent être utilisées. On rappelle ici simplement que les contraintes thermiques dépendent essentiellement de la température ambiante maximale, de l'intensité de courant traversant le câble et également de sa position dans l'aéronef.

La fonction F6 calcule les contraintes de connectique. Ici, l'utilisateur du système mettant en oeuvre l'algorithme de la figure 9, a accès par exemple à un tableau recensant les éléments de connexion pouvant être utilisés. En fonction de ces éléments sélectionnés, la fonction F6 calcule les types/jauges de câbles compatibles. On peut imaginer au niveau de cette fonction F6 une interface graphique permettant à l'utilisateur de visualiser les éléments de connectique sélectionnés.

Le résultat des calculs des fonctions F3, F4, F5 et F6 donnant un ensemble de types et de jauges valides est regroupé au niveau de la case de la figure 9 portant l'indication t / #.

On calcule par la suite (fonction F7) des courants Idim permettant le dimensionnement des câbles sous la contrainte ΔVmax. Le câble n'est alors plus considéré ici isolément mais comme un élément de la ligne Li dans laquelle il est intégré et où il contribue à une chute de tension ΔVi. Ainsi, pour la ligne Li la valeur Idimᵢ correspond à l'intensité du courant provoquant la chute de tension ΔVi maximale.

La fonction F8 permet de calculer la chute de tension maximale autorisée dans les câbles en considérant également les chutes de tension intermédiaires dues à la présence de composants (disjoncteur, diode, etc...).

La fonction F9 détermine, avant optimisation, les types/jauges de câbles valides. En fonction de l'ensemble des contraintes préalablement définies, la fonction F9 calcule les solutions (types/jauges) valides pour chacun des câbles du réseau. On vérifie ici que pour chacun des câbles d'une ligne, la contrainte de chute de tension maximale (ΔVmax) n'est pas dépassée. De cette manière, on réduit l'ensemble des solutions en entrée de l'algorithme d'optimisation.

Enfin, la fonction F10 est la fonction permettant l'optimisation des types/jauges de câbles. Schématiquement, les fonctions F1 à F8 permettent de déterminer l'ensemble des couples types/jauges admissibles de la figure 6. La fonction F9 permet quant à elle de passer aux couples types/jauges représentés sur la figure 7. Enfin, la fonction F10 d'optimisation permet de ne retenir que les types et jauges de la figure 8.

Le but du problème d'optimisation est de minimiser la masse du réseau. Mathématiquement, on peut formuler ceci en indiquant que la masse globale est la somme des masses de câbles. On sait que ces masses dépendent du type des câbles, de la jauge des câbles et de la longueur de ceux-ci. Comme pour une ligne donnée la longueur globale du câble est constante, l'optimisation se fait sur les deux variables discrètes qui sont les types et sections (ou jauges) des câbles.

Cette somme doit être minimisée avec des contraintes.

Comme première contrainte, on exprime que pour chaque câble d'une ligne, le type du câble est restreint par les zones avion traversées. On peut également exprimer dans cette contrainte le nombre de fils que chaque câble doit comporter.

Une seconde contrainte est liée à la valeur Imax. Pour chaque câble, la jauge maximale est restreinte par le calibre disjoncteur correspondant ainsi que par la contrainte d'échauffement par effet Joule du câble. Toutefois, cette restriction n'est pas la même suivant le matériau employé pour le câble. Le matériau étant lié au type de câble, on fait intervenir ici dans cette contrainte les deux variables. En outre, suivant les types de câbles employés, toutes les sections ne sont pas disponibles et il peut de plus exister une autre contrainte due à la connectique. Pour chaque câble, on peut donc indiquer que sa section (correspondant à sa jauge) est supérieure (ou égale) à une section minimale dépendant du type de câble et de la connectique et inférieure (ou égale) à une section maximale dépendant du disjoncteur, de l'échauffement, du type de câble et de la connectique.

Comme troisième contrainte, il convient de considérer les chutes de tension en lignes. Pour chaque ligne, on veut que la chute de tension sur l'ensemble des câbles ne dépasse pas une valeur maximale ΔVmax. Cette valeur maximale tient compte de la chute de tension sur l'ensemble de la ligne, câbles et composants compris. Il faut donc, dans une ligne donnée, que la somme des chutes de tension calculées reste inférieure à la valeur maximale ΔVmax admise.

Mathématiquement, il convient donc de minimiser la fonction sur les masses en tenant compte des trois contraintes précitées. La mise en équation de ce problème se déduit immédiatement de ce qui précède. La résolution du système d'équations ainsi posé est un problème classique auquel l'homme du métier sait normalement faire face.

Pour ce problème précis, on peut donner quelques indications sur un algorithme de résolution. Ainsi par exemple, au lieu d'utiliser comme variable discrète les jauges de câbles, on peut assimiler celles-ci à des fonctions continues telle la résistance et/ou la masse linéique en fonction de la section du câble. Cet artifice permet d'utiliser les méthodes et les algorithmes classiques d'optimisation basés sur la dérivation de fonctions.

Cependant, si rendre la section du câble continue correspond à une réalité physique, il n'en est pas de même pour le type du câble. Afin d'augmenter les chances de converger vers un minimum global, l'algorithme de résolution est lancé plusieurs fois avec des points initiaux différents. On estime qu'un tel procédé permet de trouver une solution dégradée au maximum de 10% par rapport à la solution optimale.

La procédure la plus adaptée de l'algorithmique traditionnelle des mathématiques est celle dite de séparation et d'évaluation (connue sous le nom anglais Branch & Bound). Celle-ci permet d'identifier le minimum global des solutions mais le temps de résolution évolue exponentiellement en fonction de la taille du problème dont le volume devient rapidement important. L'optimisation continue suggérée précédemment permet ici de faciliter la recherche de solutions.

La mise en oeuvre du procédé décrit ci-dessus, comme prototype, a permis de réaliser des gains de masse sensibles. Ce procédé permet donc, sans nullement toucher à l'architecture définie préalablement d'un réseau électrique d'un aéronef, de diminuer sensiblement la masse des câbles mis en oeuvre tout en respectant les mêmes contraintes que dans l'art antérieur (contraintes électriques, thermiques, connectique, etc ...).

Un ordinateur personnel peut être utilisé pour la mise en oeuvre de ce procédé. Une programmation sur un logiciel tableur classique peut même être envisagée.

L'optimisation des jauges et types de câbles est réalisée en considérant tous les segments d'une liaison fonctionnelle et non pas uniquement une liaison unique entre deux équipements. Le procédé décrit ci-dessus permet de dimensionner automatiquement les câbles. Actuellement, ce dimensionnement est un exercice complexe qui nécessite une pratique professionnelle profonde du métier de conception. Lorsque les longueurs de câbles évoluent, des calculs lourds et fastidieux sont nécessaires pour redimensionner les câbles. Un tel problème est fréquemment rencontré au cours du développement d'un nouvel aéronef. En effet, la définition des harnais électriques est amenée à évoluer très régulièrement durant la conception de ce nouvel aéronef. Le calcul automatique proposé par l'invention permet de mesurer rapidement les effets d'une évolution de routage ou d'un changement de technologie sur les jauges de câbles et de valider également que toutes les contraintes sont respectées.

La présente invention ne se limite pas à la forme de réalisation préférentielle décrite ci-dessus à titre d'exemple non limitatif. Elle concerne également toutes les variantes de réalisation à la portée de l'homme du métier dans le cadre des revendications ci-après.

## Revendications

1. Procédé d'optimisation d'un câblage dans lequel les caractéristiques des câbles utilisés pour relier une source (S) à une charge (Ch) réceptrice sont définies en fonction de contraintes prédéterminées et environnementales,
**caractérisé en ce que** dans les cas où une ligne (Li) réalisant la liaison entre la source (S) et la charge (Ch) réceptrice comporte plusieurs câbles (Ci) distincts reliés par des prises de coupure (P), la section des câbles est dimensionnée pour chaque câble (Ci) de la ligne indépendamment des autres câbles puis optimisée en tenant compte des contraintes globales de la ligne (Li).

2. Procédé d'optimisation selon la revendication 1, **caractérisé en ce que** préalablement à la détermination de la section des câbles (Ci) utilisés, le routage des lignes (Li) et câbles (Ci) permettant de calculer un chemin à emprunter par les diverses lignes et câbles est effectué.

3. Procédé d'optimisation selon la revendication 2, **caractérisé en ce que** le routage des lignes et câbles permet de déterminer la position au moins approximative des prises de coupure (P) séparant deux câbles (Ci) voisins.

4. Procédé d'optimisation selon l'une des revendications 1 à 3, **caractérisé en ce que** pour au moins un câble (Ci) d'une ligne plusieurs sections de câbles utilisables en fonction des contraintes imposées à ce câble (Ci) sont déterminées, **en ce que** ces câbles (Ci) sont combinés selon diverses combinaisons pour former une ligne, **en ce qu'**il est vérifié pour chaque ligne si les contraintes globales de la ligne sont satisfaites, et **en ce que** la ligne répondant aux contraintes techniques globales et de plus faible masse est sélectionnée.

5. Procédé d'optimisation selon l'une des revendications 1 à 4, **caractérisé en ce que** toutes les caractéristiques des diverses variétés de câbles pouvant être utilisées pour réaliser le câblage considéré sont mémorisées dans une base de données (D).

6. Procédé d'optimisation selon l'une des revendications 1 à 5, **caractérisé en ce que** l'optimisation de la masse globale des câbles est réalisée sur deux variables discrètes, le type et la section des câbles.

7. Procédé d'optimisation selon l'une des revendications 1 à 6, **caractérisé en ce qu'**il est appliqué à la réalisation d'un câblage électrique.

8. Procédé d'optimisation selon la revendication 7, **caractérisé en ce que** les contraintes prédéterminées comprennent une valeur d'intensité maximale définie par un disjoncteur et une chute de tension maximale admise.

9. Procédé d'optimisation selon l'une des revendications 7 ou 8, **caractérisé en ce que** les contraintes environnementales comprennent la température environnante.

10. Programme d'ordinateur stocké sur un support d'informations, ledit programme comportant des instructions permettant la mise en oeuvre d'un procédé d'optimisation selon l'une quelconque des revendications 1 à 9, lorsque ce programme est chargé et exécuté par un système informatique.

11. Support d'informations lisible par un système informatique, éventuellement totalement ou partiellement amovible, notamment CD-ROM, DVD-ROM ou support magnétique, tel un disque dur ou une disquette, ou support transmissible, tel un signal électrique ou optique, **caractérisé en ce qu'**il comporte des instructions d'un programme d'ordinateur permettant la mise en oeuvre d'un procédé selon l'une quelconque des revendications 1 à 9, lorsque ce programme est chargé et exécuté par un système informatique.

## Claims

1. Optimization method for cabling in which the characteristics of the cables used for connecting a source (S) to a receiving load (Ch) are defined on the basis of constraints that are predetermined and environmental,
**characterized in that** In the cases where a line (Li) making the connection between the source (S) and the receiving load (Ch) comprises several distinct cables (Ci) connected by cutout connectors (P), the cross-section of the cables is dimensioned for each cable (Ci) in the line, independently of the other cables, and is then optimized while taking the overall constraints of the line (Li) into account.

2. Optimization method in accordance with claim 1, **characterized in that** prior to the determination of the cross-section of the cables (Cl) used, the routing of the lines (Li) and cables (Ci) is carried out which makes it possible to calculate a path to be taken by the various lines and cables.

3. Optimization method in accordance with claim 2, **characterized in that** the routing of the lines and cables makes it possible to determine at least approximately the position of the cutout connectors (P) that separate two neighboring cables (Ci).

4. Optimization method in accordance with one of the claims 1 through 3, **characterized in that** for at least one cable (Ci) of a line, several usable cable cross-sections are determined on the basis of the constraints imposed upon said cable (Ci), **in that** said cables (Ci) are combined in different combinations in order to form a line, **in that** it is verified for each line whether the overall constraints for the line have been satisfied, and **in that** the line meeting the overall technical constraints and having the lowest mass is selected.

5. Optimization method in accordance with one of the claims 1 through 4, **characterized in that** all of the characteristics of the different varieties of cables capable of being used for implementing the cabling under consideration are stored in a data base (D).

6. Optimization method in accordance with one of the claims 1 through 5, **characterized in that** the optimization of the overall mass of the cables is implemented for two discrete variables, for the type and for the cross-section of the cables.

7. Optimization method in accordance with one of the claims 1 through 6, **characterized in that** it is applied to the implementation of electrical cabling,

8. Optimization method in accordance with claim 7, **characterized in that** the predetermined constraints comprise a maximum intensity value defined by a circuit breaker and a maximum permissible drop in voltage.

9. Optimization method in accordance with one of the claims 7 or 8, **characterized in that** the environmental constraints comprise the ambient temperature.

10. Computer program stored on a data storage medium, said program comprising instructions enabling the implementation of an optimization method in accordance with any one of the claims 1 through 9 when that program is loaded and executed by a data processing system.

11. Data carrier that is readable by a data processing system, possibly entirely or partially removable, in particular a CD-ROM. DVD-ROM or a magnetic carrier, such as a hard disk or a floppy disk, or a transmittable carrier such as an electric signal or an optical signal, **characterized in that** it comprises instructions of a computer program enabling the implementation of a method in accordance with any one of the claims 1 through 9, when that program is loaded and executed by a data processing system.

## Patentansprüche

1. Verfahren zur Optimierung einer Verkabelung, bei dem die Merkmale der Kabel, die zur Verbindung einer Quelle (S) mit einer empfangenden Last (Ch) verwendet werden, in Abhängigkeit von vorbestimmten Bedingungen und von Umgebungs bedingungen definiert sind,
**dadurch gekennzeichnet, dass** in den Fällen, in denen eine Leitung (Li), die die Verbindung zwischen der Quelle (S) und der empfangenden Last (Ch) herstellt, mehrere gesonderte, durch Trennstecker (P) verbundene Kabel (Ci) umfasst, der Querschnitt der Kabel bei jedem Kabel (Ci) der Leitung unabhängig von den anderen Kabeln dimensioniert und dann optimiert wird, indem die Gesamtbedingungen der Leitung (Li) berücksichtigt werden.

2. Optimierungsverfahren nach Anspruch 1, **dadurch gekennzeichnet, dass** vor der Bestimmung des Querschnitts der verwendeten Kabel (Ci) das Routing der Leitungen (Li) und Kabel (i) durchgeführt wird, das es gestattet, einen von den einzelnen Leitungen und Kabeln zu nehmenden Weg zu berechnen.

3. Optimierungsverfahren nach Anspruch 2, **dadurch gekennzeichnet, dass** das Routing der Leitungen und Kabel es gestattet, die mindestens annähernde Lage der zwei benachbarte Kabel (Ci) trennenden Trennstecker (P) zu bestimmen.

4. Optimierungsverfahren nach einem der Ansprüche 1 bis 3, **dadurch gekennzeichnet, dass** für mindestens ein Kabel (Ci) einer Leitung mehrere verwendbare Kabelquerschnitte in Abhängigkeit von den von diesem Kabel (Ci) zu erfüllenden Bedingungen bestimmt werden, dass diese Kabel (Ci) in verschiedenen Kombinationen zur Bildung einer Leitung kombiniert werden, dass bei jeder Leitung nachgeprüft wird, ob die Gesamtbedingungen der Leitung erfüllt werden, und dass die den technischen Gesamtbedingungen entsprechende Leitung mit der kleinsten Masse ausgewählt wird.

5. Optimierungsverfahren nach einem der Ansprüche 1 bis 4, **dadurch gekennzeichnet, dass** alle Merkmale der verschiedenen Sorten von Kabeln, die zur Herstellung der betreffenden Verkabelung verwendet werden können, in einer Datenbasis (D) gespeichert werden.

6. Optimierungsverfahren nach einem der Ansprüche 1 bis 5, **dadurch gekennzeichnet, dass** die Optimierung der Gesamtmasse der Kabel an zwei diskreten Variablen, dem Typ und dem Querschnitt der Kabel, vorgenommen wird.

7. Optimierungsverfahren nach einem der Ansprüche 1 bis 6, **dadurch gekennzeichnet, dass** es auf die Herstellung einer elektrischen Verkabelung angewandt wird.

8. Optimierungsverfahren nach Anspruch 7, **dadurch gekennzeichnet, dass** die vorbestimmten Bedingungen einen durch einen Ausschalter definierten I-iöchststromstärkewert und einen maximal zulässigen Spannungsabfall umfassen.

9. Optimierungsverfahren nach einem der Ansprüche 7 oder 8, **dadurch gekennzeichnet, dass** die Umgebungsbedingurlgen die Umgebungstemperatur umfassen.

10. Auf einem Datenträger gespeichertes Rechnerprogramm, wobei dieses Programm Befehle umfasst, die die Durchführung eines Optimierungsverfahrens nach einem der Ansprüche 1 bis 9 gestatten, wenn das Programm geladen und von einem Informatiksystem ausgeführt wird.

11. Durch ein Informatiksystem lesbarer, gegebenenfalls vollständig oder teilweise abnehmbarer Datenträger, insbesondere CD-ROM, DVD-ROM oder Magnetträger, wie eine Festplatte oder eine Diskette, oder übertragbarer Träger, wie ein elektrisches oder optisches Signal, **dadurch gekennzeichnet, dass** es Befehle eines Rechnerprogramms umfasst, das die Durchführung eines Verfahrens nach einem der Ansprüche 1 bis 9 gestatten, wenn dieses Programm geladen und von einem Informatiksystem ausgeführt wird.
